(19) Europäisches Patentamt

European Patent Office

Office européen des brevets

(11) **EP 0 971 514 A2**

(12) **EUROPEAN PATENT APPLICATION**

(43) Date of publication:
**12.01.2000 Bulletin 2000/02**

(51) Int. Cl.$^7$: **H04L 25/03**, H04L 27/20, H04L 27/22

(21) Application number: **99115721.5**

(22) Date of filing: **27.09.1996**

(84) Designated Contracting States:
**AT BE CH DE DK ES FI FR GB GR IE IT LI LU MC NL PT SE**
Designated Extension States:
**AL LT LV SI**

(30) Priority: **30.09.1995 GB 9520010**

(62) Document number(s) of the earlier application(s) in accordance with Art. 76 EPC:
**96932683.4 / 0 853 845**

(71) Applicant:
**Rural Radio Systems Limited**
**Alton, Hampshire, GU34 (GB)**

(72) Inventors:
• **Chandler, Stephen Anthony**
  **Coventry, CV4 7AY (GB)**
• **Braithwaite, Stephen John**
  **Highfield, Southhampton SO17 1SB (GB)**

(74) Representative:
**Hoste, Colin Francis**
**The General Electric Company p.l.c.**
**GEC Patent Department**
**Waterhouse Lane**
**Chelmsford, Essex CM1 2QX (GB)**

Remarks:
This application was filed on 10 - 08 - 1999 as a divisional application to the application mentioned under INID code 62.

(54) **Transmitter with waveform shaping and receiver with symbol synchronisation**

(57) A digital transmitter (70, 71) and a digital receiver (80, 81, 82, 83, 84, 85) are provided. The transmitter (70,71) is operable to generate a symbol waveform (61, 62, 63 or 64) for each symbol in digital data provided thereto to be transmitted, to combine a series of such waveforms to generate a combined waveform (60) and for modulating a carrier waveform with the combined waveform to generate modulated signals for transmission in short bursts from the transmitter without producing substantial spectral spreading. The receiver is operable to receive digitally modulated signals and produce therefrom corresponding symbol signals indicative of symbols present within the modulated signals, and to sample the symbol signals to provide a corresponding received data output signal from the receiver. The transmitter and receiver can be incorporated into a transmitting and receiving station (20, 21), a plurality of such stations at randomly distributed locations forming a telecommunication network.

FIG 10a

**Description**

This invention relates to distributed circuit switched telecommunication networks, and is concerned more particularly, but not exclusively, with digital transmitters and digital receivers for incorporation into transmitting and receiving stations for such networks in which a plurality of such stations are provided at randomly distributed locations and in which switching circuitry is provided within the stations themselves for routing of calls between stations in the network utilising other stations in the network for relaying of such calls where necessary.

In many countries, although there may be a telephone service to towns and some principle villages, the majority of the population has no effective access to telephones. There is a need in such countries for a network of telephones at such a density that substantially the whole of the population lives no more than a few kilometres from a public telephone. However this would require installation of a network comprising a large number of widely spaced telephones which would be prohibitively expensive if a conventional wired telephone system is used. The paper "A Distributed Rural Radio System for Developing Countries", S.A.G. Chandler, S.J. Braithwait, H.R. Mgombelo et al, Fourth IEE Conference on Telecommunications, IEE Conference Publication No. 371, April 1993 describes a rural radio telephony system which, by virtue of its exchangeless network structure, is ideally suited to providing a basic telephone service to widely separated sites. Such a radio telephony system uses a network of cooperating radio nodes which do not require a central exchange or interconnecting infrastructure. Each node consists of a transmitting and receiving station comprising two single channel digital transceivers, at least one telephone interface and controllers containing software implementing a protocol to effect the required communication control. The links between nodes are fixed capacity links (as opposed to packet switched or statistically multiplexed links) as required for duplex speech in telephone traffic. Each transmitting and receiving station comprises a solar powered digital radio unit with one or more telephones connected to it. Calls within a reasonable range (50 kilometres or so in reasonably favourable terrain) are made by direct station-to-station communication. Beyond this range, however, calls must be relayed by other stations within the network which are not being used at the time for making calls. Calls outside the area served by the network, or requiring an excessive number of relay hops, may be routed through gateway nodes into the public service telephone network.

The most similar systems in use currently are packet radio systems. However these systems typically use a single radio channel statistically multiplexed, usually resulting in a much lower information rate, and always having a delay variation unacceptable for duplex speech.

In "analysis and simulation of a distributed rural radio telephone network", 4th European Conference on Radio Relay Systems 1993, pages 97-102, Chandler and Ni describe the results of theoretical analysis and computer simulation of a self-configuring radio relay system to provide low-cost radio telephony in rural areas of developing countries. US-A-4 284 848 discloses a network of telephone subscribers, located remote from the primary telephone system, including subscriber stations having two frequency-agile, multichannel duplex transceivers for communicating with a central office having one duplex transceiver for each channel. The central station includes controls for automatically configuring subscriber stations as repeaters to permit calls to and from other subscriber stations to be routed through repeater-configured subscriber stations. The subscriber stations may be mobile radio- telephone stations. EP-A-0 552 642 discloses a radio transmission and reception apparatus in which only one phase lock loop circuit is provided to which both the transmitting section and the receiving section have alternating access.

It is an object of the invention to provide an improved transmitting and receiving station for a distributed circuit switched telecommunication network.

The invention is defined by the accompanying claims.

In order that the invention may be more fully understood, embodiments of the invention will now be described, by way of example, with reference to the accompanying drawings, in which:

Figure 1
is an explanatory diagram of a distributed circuit switched telecommunication network;
Figure 2
is a block diagram of a transmitting and receiving station in such a network;
Figures 3 and 4
are explanatory diagrams illustrating methods of call routing in such a network in accordance with the invention;
Figures 5, 6, 7 and 8
are explanatory diagrams illustrating methods of call interruption in such a network in accordance with the invention; and
Figures 9, 10, 10a, 11 and 12
are explanatory diagrams illustrating preferred circuit features utilised in a transmitting and receiving station in accordance with the invention.

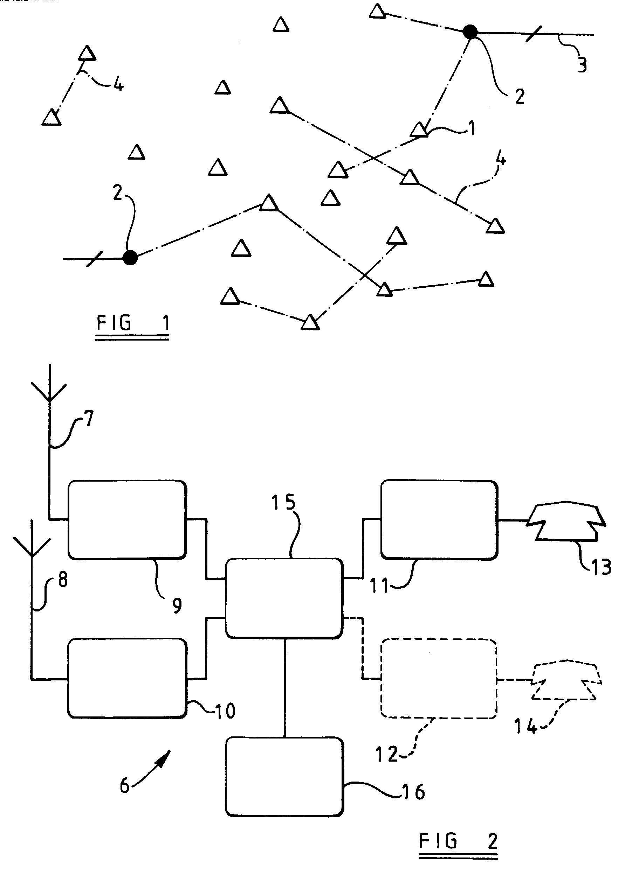

Figure 1 is a diagram showing the location of nodes in a hypothetical distributed circuit switched radio telecommunication network comprising a series of randomly located fixed nodes 1 at which transmitting and receiving stations are located. In addition to the network nodes 1, several gateway nodes 2 are shown providing call access to the public service telephone network in which telephone communication takes place in conventional manner by way of wired links under centralised exchange control. As indicated by broken lines 4 in the figure, calls may be made between network nodes 1, or between a network node 1 and a gateway node 2, either directly when the nodes are close enough to one another, or by way of other nodes 1 which serve to relay the calls.

Figure 2 is a block diagram of a transmitting and receiving station 6 comprising two transmit/receive aerials 7, 8, two single channel digital transceivers 9, 10, at least one telephone interface 11, 12 and associated telephone 13, 14, a transceiver interface 15 and a control unit 16 for effecting control of communication between stations within the network. Each station 6 can be used to terminate up to two calls, that is two calls being made simultaneously using the telephones 13 and 14, or alternatively to relay a single call by simultaneously using the two transceivers 9 and 10 to receive and re-transmit the call information in the two directions. The transceivers 9 and 10 typically use separate frequency channels, although, in a small enough area for time skewing not to be problematic, time division multiplex could be used. Typically the two channels are selected from a set of 200 available channels, although larger numbers of channels could be useful in certain situations.

The routing of calls within the network is based on the geographical location of the nodes in the network, rather than on the provision of routing tables stored within the stations, as this gives a much better performance when there is no centralised exchange. The implementation of routing and initial call setup are performed utilising a specific calling channel dedicated to this purpose on which information is conveyed using asynchronous packets. The separate traffic carrying channels by means of which the speech information is received and transmitted can be used for either asynchronous packet or fixed frame circuit switched transmission formats depending on the protocol of the system and user requirements.

## Call Routing

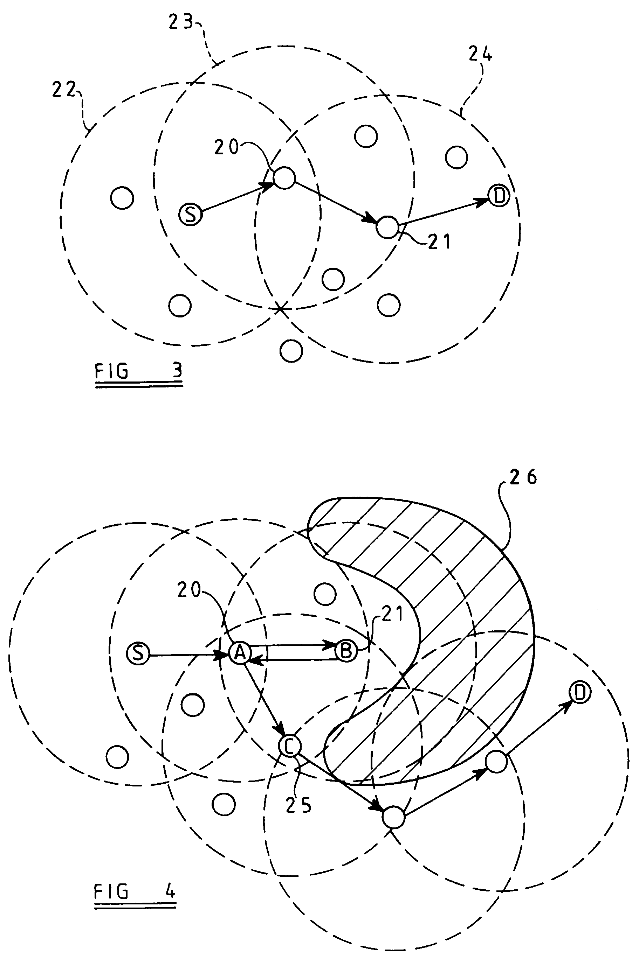

The routing of a call from a source station S at which the call is made to a destination station D to which the call is directed is controlled by an appropriate routing algorithm implemented by cooperation between the control units of the source and destination stations and any other stations used for relaying the call. The routing algorithm establishes a series of communication links starting from the source station F and terminating at the destination station D utilising an iterative process, if the destination station D is not within single hop range of the source station S. The simplest method of such routing, shown in Figure 3, involves determining at each stage of the iteration that station within radio range of the previous station which is nearest to the destination station D. If the nearest station is no nearer than the previous station utilised in the routing, then the route is blocked. Figure 3 shows this method applied to relay a call by way of two stations 20 and 21, the radio ranges associated with the source station S and the stations 20 and 21 being shown by the circles 22, 23 and 24.

The manner in which this routing algorithm is implemented by the control unit of each station will now be described. The control unit of the previous station will broadcast an interrogation signal in the form of a CQL message which will be received by all of the stations available for relaying within range. If this interrogation signal is received by the destination station D, the control unit of the destination station provides an immediate acknowledgement signal to indicate that the call may be relayed from the previous station directly to the destination station. Other stations receiving the interrogation signal provide an acknowledgement signal which is transmitted after a delay which increases with the distance of the station from the destination station D. The amount of this delay is calculated by each station on the basis of the distance of the station from the destination station determined either from a list of the locations of other stations stored within the station or from use of station numbers indicative of the grid references of the stations. If the stations operate a CSMA protocol, so that they do not provide an acknowledgement signal if the channel is already in use, most collisions can be avoided. As soon as the previous station receives an acknowledgement signal from another station, it sends a confirmation signal to the selected station. Other stations within range (but at a greater distance from the destination station D implying a greater delay before acknowledgement) will also receive the confirmation signal and will thereby be inhibited from acknowledging the interrogation signal, thereby preventing unnecessary congestion on the calling channel.

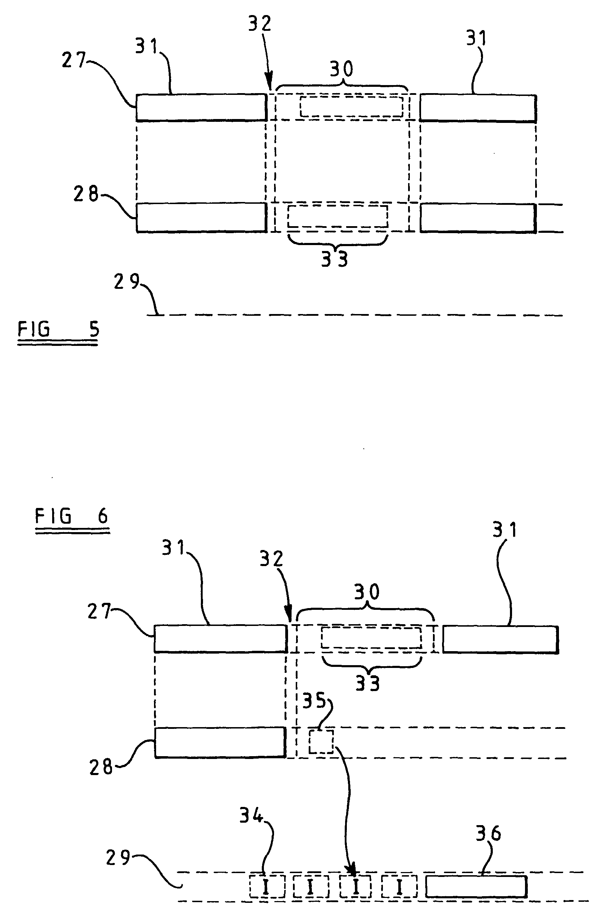

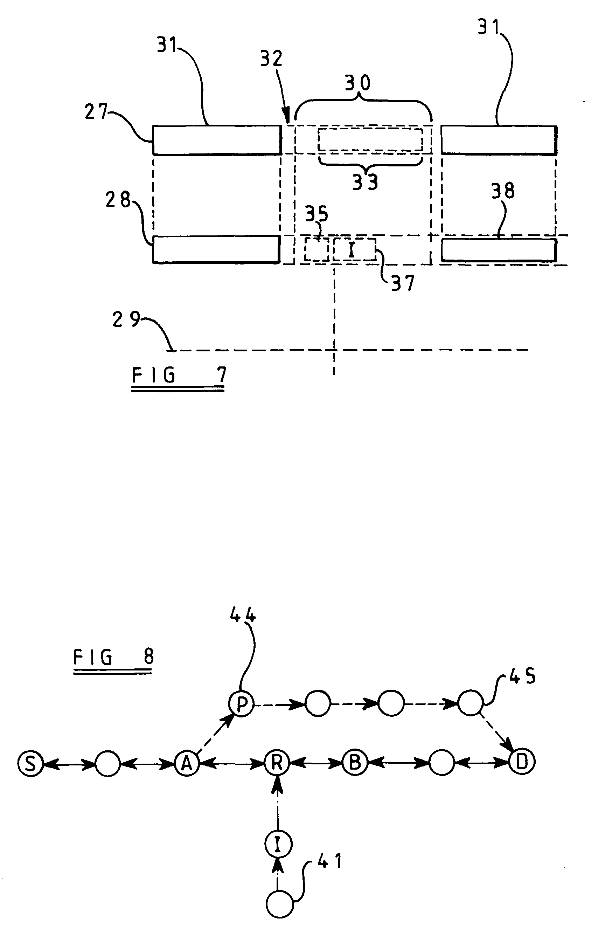

This routing algorithm has the disadvantage that it will not find all possible routes, and calls can therefore be unnecessarily blocked. For example, referring to Figure 4, a call may be blocked at station 21 due to the presence of an obstacle 26, such as a mountain or simply an area where there are no stations available for relaying the call. One way to improve this situation is to generalise routing the algorithm slightly. Instead of selecting the nearest station to the destination for relaying the call at each stage, the next relay station may be selected at each stage so as to maximise the probability of completing the route to the destination. The probability of completing the route from any station varies inversely with the distance from the station in the absence of any knowledge that the route is blocked. However, if it has been determined that the route is blocked at station 21 in Figure 4 so that there are no available stations in suitable locations to act as relays in accordance with the original algorithm, then a modified algorithm can be used to backtrack one step to station 20 and to modify the probability distribution with the knowledge that the station 21 is blocked. This results in the station 21 or stations near to the station 21 being less likely to be chosen, thus enabling a further station 25 to be selected for relaying the call in order to implement a route to the destination bypassing the obstacle 26.

If the location of the station 21 is known to further stations, such as 25, which may potentially be involved in relaying the call, as will be the case if these further stations overhear a signal from the station 21 confirming backtracking, the probability of completing routing from any station, or at least an approximation to it, can be calculated by each of the stations on this basis, and hence an appropriate delay determined for responding to the interrogation signal from the previous station in order to implement the routing in the same way as before.

**Call Interruption**

When a station is relaying a call between other stations in the network, both transceivers of the station will be in use, and accordingly the station will not be available to send or receive a new call (terminating at that station) during such relaying unless a special call interruption facility is available to permit rerouting of the existing call to enable the new call to be made.

Figure 5 diagrammatically shows the information carried by the two traffic channels 27, 28 and the calling channel 29 of a station which is relaying a call between two other stations. During a normal telephone conversation, although a full duplex transmission path will be provided between the two telephones, usually only one party will speak at a time, and there is silence in both directions for an appreciable fraction of the transmission time, for example during the gaps between words and syllables. There is no need to transmit information during such periods of silence, apart from information as to the duration of the silence. In the described system, the speech information is divided into 10 ms frames which are actually transmitted in packets of about 4 ms duration enabling the information in the two directions to be transmitted alternately.

When a station is relaying a call (or is simultaneously terminating two calls) the two transceivers are used to communicate with the other two stations using different frequencies. As shown in Figure 5, the transmitters of both transceivers are synchronised to transmit simultaneously so that, as speech information is being transmitted in one direction to one station on the first traffic channel, speech information is being transmitted in the opposite direction to the other station on the second traffic channel. The two transceivers are available to receive information in intermediate periods 30 between successive transmitting periods 31, guard intervals 32 being provided between the transmit and receive periods in order to prevent any overlap of these periods. If both transceivers were occupied with receiving signals in one or other direction during the receiving periods, it would not be possible for the relaying station to receive a call made to it. However during each period 30 each transceiver is actually receiving speech information for only a proportion 33 of the time, and there are periods of silence. In these periods of silence short null speech packets may be received indicating that the receiver is available to receive interrupting signals from a station wishing to call it, so as to enable the station to interrupt relaying of the existing call to accept the new call. Re-routing of the previously relayed call can be effected automatically so that there will be no significant gap in transmission of the call.

One possible method by which the relayed call may be interrupted will be described with reference to Figure 6 which shows a station which is in use for relaying a call being called by another station transmitting interrupting packets 34 on the calling channel. During the transmitting periods 31 and the periods 33 during which speech information is being received, neither of the transceivers is available for receiving the interrupting packets 34. However receipt of a null speech packet 35 on one of the traffic channels indicating a period of silence causes fast switching of the transceiver to receive information on the calling channel, and thus enables the existence of an interrupting packet 34 on the calling channel to be detected and to be acknowledged by transmitting of an acknowledgement signal 36 on the calling channel. As a call to any station has priority over an existing call being relayed by that station, the acknowledgement signal 36 will indicate ringing of the telephone at the called station, and will result in speech transmission being initiated with the caller using one of the traffic channels if the call is taken by the telephone being taken off hook. This causes the existing relay link to be broken and alternative routing of the existing call to be implemented. The relayed call can similarly be interrupted if the telephone is taken off hook to make a call to another station. Although the short break in transmission of the existing call in such a method should not be serious, it is possible that the existing call could be broken.

In this method the routing of the new call to the station which is currently relaying a call proceeds according to the routing algorithm already described until the penultimate station is reached. As with other stations, this penultimate station incorporates a neighbour table indicating those stations which are within guaranteed radio range as determined by the geographical distance of those stations and the picking up of signals from those stations, and the neighbour list of the penultimate station will include the destination station. The penultimate station will attempt to reach the destination station by calling repeatedly on the calling channel, and, if the call is accepted by the destination station, an acknowledgement signal is returned indicating the start of ringing on the destination station. Otherwise a signal is returned from the destination station indicating that it is engaged.

This method has the difficulty of requiring very fast switching of channels which results in increased circuit complexity in providing the required frequency switching and can encounter difficulties due to the settling time of demodulator levels.

Figure 7 illustrates an alternative interruption method which overcomes the need for fast channel switching by replacing the neighbour tables referred to above held by the stations by tables of records of channel allocation signals sent between stations when establishing routes for existing calls. Thus, in routing of a call to a destination station which is currently relaying a call on its traffic channels, the penultimate station will refer to records of other stations heard and of the frequencies of the channels to which the transceivers of the heard stations have been allocated. These records are entered when their frequency set up commands are overheard by the station, and are deleted when subsequent attempts to call the corresponding station on that channel fail, or the corresponding station is heard calling another station on the calling channel. The penultimate station then attempts to reach the destination station by calling repeatedly on the or each traffic channel of the destination station, in accordance with the previously recorded channel allocation information. During use of the called channel to transmit or receive speech information, reception of the calling signal will be inhibited in accordance with the CSMA protocol. However, on reception of a null speech packet 35 indicating a period of silence on the called channel, the channel will become available to receive an interrupting packet 37 from the calling station, and this will then permit transmission of an acknowledgement signal 38 on the called channel indicating initiation of ringing at the called station and setting up of the call in the manner already described. The frequency settling tine requirements on the penultimate channel in such a method are not demanding. However the possibility still exists that the existing relayed call could be broken.

A modification of the above described interruption method will now be described with reference to Figure 8 which substantially removes the possibility of the existing relayed call being broken during the interruption. Figure 8 shows diagrammatically a call from a source station S to a destination station D being relayed by a number of other stations including a station R to which a new call is to be directed from a station 41 by way of relaying stations including the penultimate station I. As previously indicated periods of silence or gaps in data transmission are recognised by the terminal stations, and special null speech packets, shorter than the normal speech packets used to convey ordinary signals, are transmitted. The null speech packets contain information to enable overhearing stations to identify which station has transmitted the null speech packet and to synchronise to the null speech packet, as well as priming the normally receiving station to listen for interruptions during the empty remainder of the time slot. Since the penultimate station I can only be sure of hearing signals from the station R and not necessarily from the station A or the station B adjacent the station R in the opposite direction, the timing of the interrupting packet from the station I must be able to be determined only by signals from the station R.

A good method to achieve this would be to use the null speech packets from the station R to synchronise the station I, but for the station I not to transmit an interrupting packet until the station R stops transmitting null speech packets. This means that the subscriber at one end has started speaking making it more likely that the other subscriber has stopped speaking. The station I will keep trying until a connection is made. If a null burst from the station A is heard, this problem does not arise and the interrupting packet is transmitted immediately.

When a call request is received by the station R from the penultimate station I, or when a telephone of the station R is taken off hook to initiate a call, a message is passed to an adjacent station A on the call route between the source station S and the destination station D instructing re-routing of the call. This will cause one of the transceivers of the station A to temporarily interrupt transmission to the station R in order to transmit a CQL message with the object of setting up an alternative route for the call. The station A then awaits a response from a potential replacement relay station using the normal routing procedure already described, except that the transceiver of the station A returns to transmitting to the station R on the traffic channel after sending out of the CQL message so that further communication with the potential replacement relay station must take place on the traffic channel rather than on the calling channel as would normally be the case. The routing procedure is then continued in the normal manner until a connection is made with the destination station D, or with a penultimate station 45 if both transceivers are in use at the destination station D. Only when confirmation is received by the station R that such a connection has been made is relaying of the call by way of the station R interrupted and initiating of ringing at the station R effected (or call routing begun if a call is being made from the station R).

Whilst this method prevents loss of existing relayed calls, the method has a slightly adverse effect on the availability to be called of same stations which are currently relaying calls as such stations will not be available to make or receive calls if they are the only stations able to act as relays for the existing calls. By this method, the existing relayed call may suffer a transmission break in one direction equal to twice the frequency settling time plus the time to send a CQL message and receive a response to it. Nevertheless this will still be less than the transmission break provided by call interruption in the other methods described.

## Mobile Stations

Where mobile transmitting and receiving stations are to be used in the network, each mobile station is associated with a home base node at which a normal fixed transmitting and receiving station is located. When switched on the mobile station transmits registration packets to its home station at regular intervals, say once every ten minutes, these registration packets being relayed through normal fixed stations within the network where necessary. The transmitted registration packets, when relayed by other stations, will contain information identifying the first station used to effect such relaying, and thus will indicate to the home station the approximate location of the mobile station, that is a location within range of the first relay station. Such registration of the location of the mobile station will be updated on a regular basis by receipt of the registration signals by the home station.

All call requests to the mobile station are directed initially to the home station which then relays such call requests to the mobile station in the normal packet radio mode using, where necessary, the first relay station (which is close to the mobile station as indicated by the registration information) and possibly other stations to relay the call request to the mobile station. Receipt of the call request relayed in this manner by the mobile station results in ringing at the mobile station, and, when the handset at the mobile station is taken off hook to accept the call, routing of the call back to the calling station is implemented in accordance wit the described routing algorithm. If the calling station is closer to the mobile station than the home station, such routing will often result in the call not being relayed by way of the home station.

It should be noted that such routing in response to taking the telephone off hook to accept a call is a preferred feature used in the network as a whole as otherwise, if call routing were initiated so as to reserve capacity on the stations to be used in relaying the call at the time that calling is initiated, unnecessary congestion of the network would be caused by the fact that such stations would be reserved for use whilst the telephone at the called station is ringing and remains unanswered.

## Transmit/Receive Switching

In the described system each transceiver transmits and receives on the same frequency, and it is therefore essential to suppress the transmit signal by a large amount in order to ensure that this does not interfere with the reception of the signal to be received by the transceiver. The transmitter output must therefore be attenuated by much more than the radio transmission path loss, that is by of the order of 140 dB. Where switching from transmit to receive mode must be fast, that is significantly less than a millisecond, it is difficult, if not impossible, to turn oscillators on or off or to shift their frequency as is usually done in press-to-talk transceivers. This therefore places stringent requirements on the switching circuits to be used for switching between the transmit and receive modes in such transceivers.

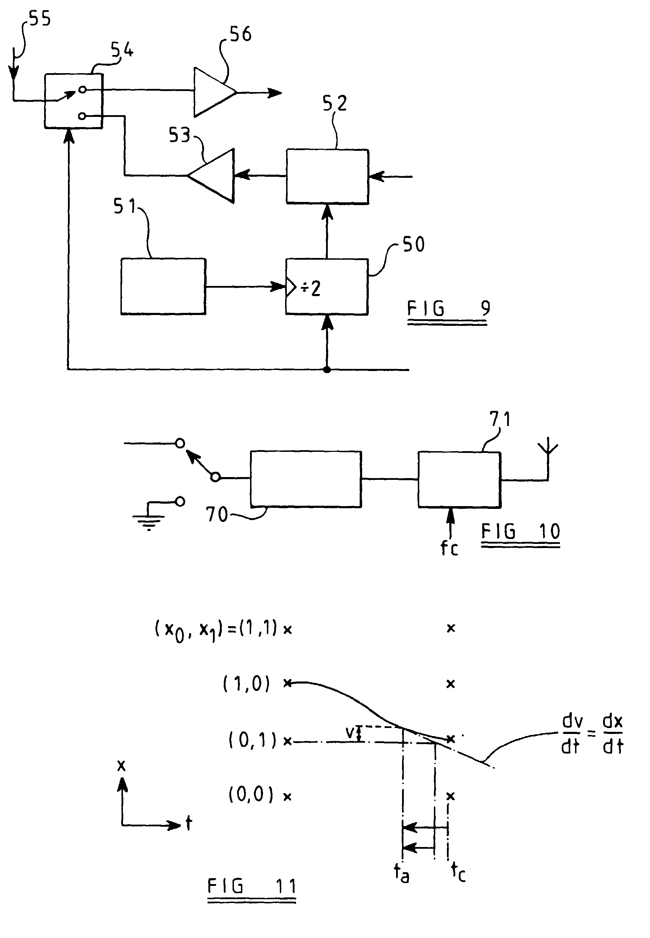

Accordingly, as shown in the block diagram of Figure 9, one of the frequency signals which is mixed to produce the transmit carrier frequency signal, or the carrier frequency signal itself in the case of an FM transmitter, is derived from a frequency divider 50 comprising a digital bistable circuit (a flip flop). Such digital bistable circuits may be turned off instantaneously using a logic gate. In the transmit mode the frequency signal from a frequency source 51 is divided by two by the frequency divider 50 and is supplied to a modulator 52 in which the baseband signal for transmission is used to modulate the carrier signal output by the frequency divider 50 to produce a modulated signal for amplification by an amplifier 53 and transmission by way of the transmit/receive switch 54 and the antenna 55.

When the transceiver is to be used in the receive mode, the transmit/receive switch 54 is switched into the receive position, as shown in Figure 9, by application of an appropriate control signal, and at the same time the control signal is applied to an inhibit input connected to a logic gate within the frequency divider 50 so as to inhibit the transmit carrier frequency signal. The fact that the carrier frequency is not present in any of the input signals to the circuit and is only generated by the non-linear bistable operation of the flip flop means that the carrier signal is completely turned off by this operation. This does not remove the necessity to turn off the transmit amplifier 53 as this would otherwise still amplify any noise signal, but the requirements for turning off the amplifier 53 are much less stringent than would otherwise be the case. The received signal of the same frequency is supplied by way of the switch 54 to the receive amplifier 56 and hence to the receiving section of the transceiver.

## Transmitter Modulation Ramping

Since the information is transmitted in such a system in short bursts, measures must be taken to prevent the transient envelope variation at the start of each burst from causing spectral spreading which could result in interference to users of adjacent channels. To this end the system uses linear modulation of the carrier frequency in order to provide optimum band width efficiency, and provides ramping up and down with very short ramp up and down times, at the beginning and end of transmission bursts in order to minimise spectral spreading.

As opposed to the more established constant envelope schemes, known linear modulation systems have enabled orthogonal modulation (in which each symbol waveform can be received independently of all other symbol waveforms) to approach the theoretical limits of bandwidth efficiency. However the use of frequency modulation type envelope shaping for such systems has been claimed to cause substantial spectral spreading of linearly modulated burst mode signals. Whilst overall amplitude modulation of the linearly modulated signal associated with ramping up and down would appear to necessarily cause some spectral spreading, it is submitted that such known systems utilise an incorrect approach to the problem, leaning too heavily on the approach which must be taken with constant envelope schemes.

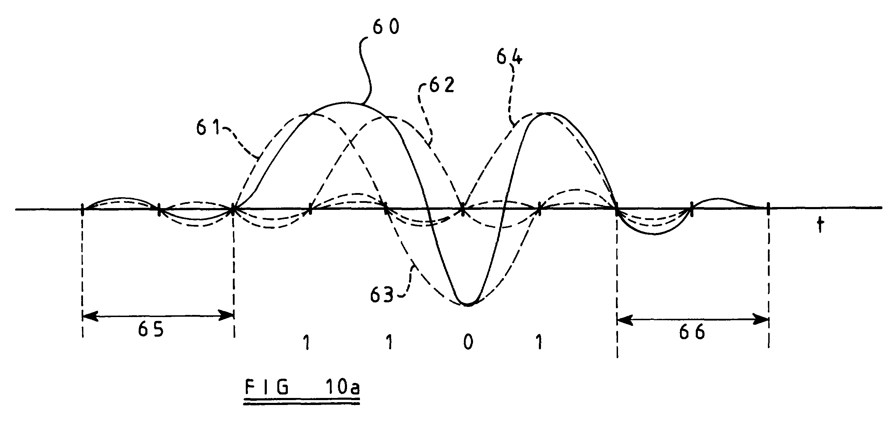

The modulation system in accordance with the invention uses an approach which results in very short ramp up and down times with, in principle, no spectral spreading at all. By contrast with the known system in which the ramping up and down is effected by overall amplitude modulation of the linearly modulated signal, this system involves generating for each symbol of the data to be transmitted a respective symbol waveform having ramp up and ramp down portions of limited duration. A series of such symbol waveforms which overlap in time, such as the waveforms 61, 62, 63 and 64 shown in Figure 10a representative of the digital symbol sequence 1101, are combined within a transversal filter 70 as shown in Figure 10 in order to produce a combined waveform 60 having ramp up and ramp down portions 65 and 66 of limited duration. The generation of the combined waveform by convolution of a stream of impulses representing the data sequence with the individual symbol waveforms can be implemented using precalculated stored waveforms or calculated in real time using a digital signal processor followed by an anti-aliasing filter. The output of the transversal filter 70 is then supplied to a modulator 71 in order to modulate a carrier signal of frequency $f_c$ to produce the required linearly modulated signal for transmission.

The symbol waveforms are theoretically of infinite duration so that an approximation is made by truncating each waveform to provide ramp up and ramp down portions of limited duration. However the power associated with the ramp up and ramp down portions can be made extremely small with a truncation length of only a few symbol periods, the truncation being imposed by causality considerations since the waveforms are normally symmetrical.

The power spectrum of a signal resulting from an uncorrelated sequence of data would be the same as the energy spectrum of the individual symbol pulses. Correlation of the sequence of data would cause some attenuation at certain frequencies but would not cause spectral spreading of the signal. If each transmitted burst is generated in accordance with the system of the invention by convolving the finite length data sequence with the symbol waveform, the spectrum of the burst would have the same spectrum as the continuous signal. Although the length of the symbol waveform would cause power to be transmitted for a few symbols before the first actual symbol instant (the centre of the pulse), this is all the ramping which is necessary. In practice this only requires precursors of two or three symbols which is very much less than is required in conventional schemes.

## Receiver Synchronisation

The performance of all digital receivers depends critically on the synchronisation of a clock signal used to determine the timing of the sampling of the filtered received signal. The conventional technique for controlling the clock signal uses the zero crossings of the received waveform to synchronise a local timing oscillator using a phase locked loop circuit. In this case the bandwidth is a compromise between smoothing of the random timing variations of the zero crossings and the speed at which the phase locked loop can acquire lock. The random timing variations are caused not only by the effects of noise but also by the fact that the zero crossings occur at times dependent on the data sequence being transmitted. Thus performance is limited in such a system even in the absence of noise.

Orthogonal modulation of the transmitted signal means that the symbol waveforms obtained from the received signal after filtering are such that each symbol waveform determines the signal value at one, and only one, sampling point in a regular sequence of sampling points. Although the symbol waveforms overlap, all but one of the symbol waveforms will be zero at each sampling point. Examples of modulation formats for which this is true are QAM, QPSK, and pi/4 DQPSK. Appropriately baseband filtered signals sent over an FM or PM channel could also be included.

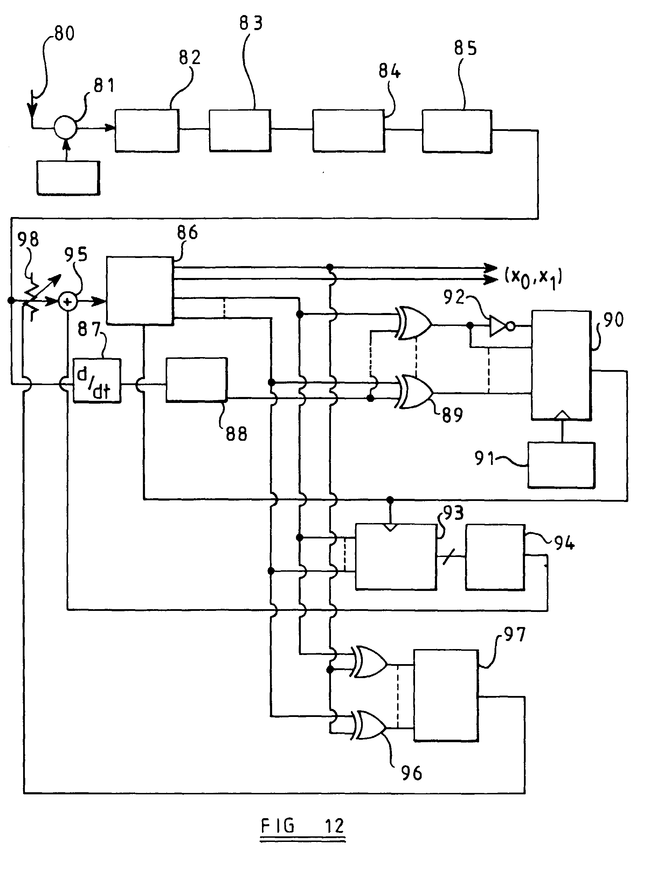

If limiter discriminator integrator techniques are used for reception of any form of orthogonal PSK signal or correct amplitude scaling (AGC) signal used with QAM modulation, the signal x in the absence of noise will have a value $(x_0, x_1)$ at each sampling point selected from among a finite set of values (1,1), (1,0), (0,1) and (0,0), the particular value $(x_0, x_1)$ determining the symbol received. As shown in Figure 11, which is a graph of the signal x against time t showing a change in the value of x between two sampling points, the signal x will be in error by an amount dv if the actual sampling time $t_a$ is in error relative to the correct sampling time $t_c$ by an amount dt. If the error v and its time derivative dv/dt (which is the same as the time derivative dx/dt of the signal) are measured, the timing error can be estimated as dv/(dv/dt) and this quantity can be used to adjust the phase of the timing clock signal. However in the presence of noise disproportionate errors will occur will occur if dv/dt is small. It would therefore be preferable to scale the adjustment amount by a factor of |dv/dt|, the magnitude of the slope of the signal, which results in an adjustment amount of k.dv/sgn(dv/dt) where k is a weighting factor which will be greater the smaller the slope and sgn(dv/dt) represents the sign of dv/dt, so that the adjustment amount can also be written as k.dv.sgn(dv/dt). The timing of the clock signals based on such phase adjustment is superior to the conventional zero crossing technique since, although the adjustment will be degraded by additive noise, it will be unaffected by the data sequence in the received signal and a major cause of timing jitter is thereby eliminated.

Figure 12 is a block diagram of a pi/4 DQPSK receiver utilising such phase adjustment for controlling the sampling timing. In this receiver a received signal x is supplied by a receiving section consisting of an antenna 80, a tuning circuit 81 provided with a local oscillator, a matched filter 82, a limiter 83, a discriminator 84 and a symbol integrator 85. The signal x is supplied both to an analogue-to-digital converter 86 and to a differentiator 87 followed by a comparator 88. The output of the converter 86 is a digital word, the most significant bits $(x_0, x_1)$ of which are representative of the value of the received symbol provided that the scaling is correct and are outputted from the circuit as the received data $(x_0, x_1)$, whereas the least significant bits of the output of the converter 86 constitute the two's complement of the error amount dv. The output of the differentiator 87 is the time derivative dv/dt of the signal error, which is equal to the time derivative dx/dt of the signal, and the output of the comparator 88 is a digital signal representing sgn(dv/dt). The process of multiplication of the signal error dv by sgn(dv/dt) corresponds to taking the two's complement of dv if dv/dt is negative. Thus multiplication of dv by sgn(dv/dt) can be approximated by supplying the least significant bits of the output of the convener 86 and the output of the comparator 88 to a set of exclusive - OR gates 89 to provide an output corresponding to the one's complement of dv which approximates to the two's complement (with only an error in the least significant bit). The output of the gates 89 is supplied to a counter 90 provided with a crystal frequency reference oscillator 91 which in turn supplies the clock signal to the analogue-to-digital convener 86 by counting down from a high frequency reference provided by the oscillator 91. The counter is reset by application of a reset signal supplied by an inverter 92 which receives an input from the gate 89 associated with the most significant bit of the least significant bits output from the convener 86 for controlling the clock signal.

Gain and offset errors in the signal x can also be a major cause of problems when using limiter discriminator reception of pi/4 DQPSK as well as for multilevel QAM schemes, and further parts of the receiver circuit are provided for compensating for such errors. The offset error can be approximated by the least significant bits of the output of the analogue-to-digital convener 86, that is those bits other than the data bits, so that offset error compensation can be obtained by using these bits to recursively adjust the offset level. This can be done by supplying the least significant bits to an accumulator or up/down counter 93 which counts up when the offset estimate is low and counts down when the offset estimate is high, and by supplying the resultant signal to a digital-to-analogue converter 94 and a potentiometer 95 which controls the offset of the signal x. A more sophisticated system would be to use all the error bits and adjust the offset by an amount proportional to the error.

In order to provide gain compensation, use is made of the fact that the gain error may be approximated by the error given by the least significant bits of the output of the analogue-to-digital converter 86 divided by the voltage corresponding to the symbol in question, and the fact that the performance will be very little different if the sign of the symbol voltage only is used instead. This approximation is easy to implement as division by the sign of the symbol may be achieved by passing the most significant bit of the output of the converter 86 through a set of exclusive - OR gates 96 with the least significant bits as shown in the figure. The output $v \cdot \text{sgn}x = v \cdot x_0$ of the gates 96 is supplied to an accumulator or up/down counter 97 which is connected to a potentiometer 98 to effect the required gain error compensation. However allowance would have to be made to the fact that the system could adapt to a false null point if the allowable range of parameters was too large.

The same principle, i.e. minimising the error at the sampling time, may be used in demodulators based on digital signal processing with the difference that, as the output of a digital signal processing differential demodulator would be in Cartesian rather than polar coordinates, some form of approximation would be needed to avoid unnecessarily lengthy calculations. However even the simplest approximation using a constant magnitude of adjustment is found to perform adequately in practice.

## Claims

1. A digital transmitter for transmitting digitally modulated signals in bursts, characterised in that the transmitter comprises:

   (a) symbol waveform generating means for generating a symbol waveform (61, 62, 63 or 64) of limited duration for each symbol of digital data to be transmitted;
   (b) waveform convolution means (70) for combining a series of such symbol waveforms (61, 62, 63 or 64) such that each waveform is delayed with respect to and overlaps a previous waveform, so as to produce a combined waveform (60) representative of a sequence of symbols of the digital data to be transmitted; and
   (c) signal modulation means (71) for modulating a carrier waveform with said combined waveform (60) so as to provide said modulated signals for transmission in bursts without producing substantial spectral spreading, but without the use of separate ramp up and ramp down waveforms.

**2.** A digital receiver for receiving digitally modulated signals, characterised in that the receiver comprises:

(a) receiving means (80, 81, 82, 83, 84, 85) for receiving the digitally modulated signals and for producing therefrom corresponding symbol signals indicative of symbols within the transmitted digital data;

(b) sampling means (86, 87, 88, 89, 90, 91, 92) for sampling the symbol signals at sampling points determined by a clock signal in order to provide a received data output signal corresponding to the transmitted digital data and an error output signal; and

(c) sampling synchronisation means (93, 94, 95) for synchronising sampling of the symbol signals by the sampling means by adjusting the timing of the clock signal to minimise the error output signal.

**3.** A transmitting and receiving station for a telecommunication network, the station incorporating a transmitter according to Claim 1 and a receiver according to Claim 2 for transmitting and receiving radiation respectively at the station, the network incorporating a plurality of such stations provided at distributed locations and in which switching circuitry is provided within the stations themselves for routing of calls between stations in the network utilising other stations in the network for relaying of such calls where necessary, characterised in that the station (6) incorporates call interruption means (16) acting to interrupt an existing call which is being relayed by the station (6) for the purpose of receiving a new call to the station (6) from a further station in the network and comprising:

(a) call monitoring means (30) for receiving, during intervals of time between the relaying of speech or data signals within the existing call, an interrupting signal (34) indicating a call request to the station (6) from the further station; and
(b) call accept means (36) for interrupting the relaying of the existing call by the station (6) in response to the interrupting signal (34) to enable the new call to be received from the further station.

**4.** A station according to Claim 3, wherein the call interruption means (16) incorporates re-routing means for selecting, in response to receipt of the interrupting signal (34), an alternative route for relaying the existing call and for re-routing, in the event of an alternative route being available, the existing call to enable the new call to be received from the further station.

**5.** A station according to Claim 3 or 4, wherein the call interruption means (16) includes null transmitting means for transmitting null packets (35) indicative of gaps in the speech or data signals being transmitted within the existing call, the call monitoring means (30) being adapted to receive said interrupting signal (34) during transmission of said null packets (35).

**6.** A station according to Claim 5, wherein the call monitoring means (30) is adapted to receive said interrupting signal (34) only after transmission of a sequence of null packets(35) has ceased.

**7.** A mobile transmitting and receiving station incorporating a digital transmitter according to Claim 1 and a digital receiver according to Claim 2, said station for use in a telecommunication network in which a plurality of transmitting and receiving stations are to be provided at distributed locations and in which switching circuitry is provided within the stations themselves for routing of calls between stations in the network utilising other stations in the network for relaying of such calls where necessary, the mobile station comprising:

(a) registration means for transmitting registration signals to a fixed base transmitting and receiving station associated with the mobile station utilising other fixed stations in the network for relaying of the registration signals where necessary such that the base station receives an indication of the approximate position of the mobile station from the location of the first fixed station used in relaying the registration signals; and

(b) call reception means for receiving a call from a further station in the network relayed by way of the base station and routed towards the mobile station by the base station on the basis of the approximate position of the mobile station indicated by the registration signals, and or initiating routing of the call back to the further station following acceptance of the call.

**8.** A transmitting and receiving station for use in a telecommunication network, the station incorporating a transmitter according to Claim 1 and a receiver according to Claim 2, said network comprising signalling means (55) for transmitting and receiving signals on the same frequency, transmitting means (50, 51, 52, 53) for transmitting signals by way of the signalling means (55), receiving means (56) for receiving signals by way of the signalling means (55), and switching means (54) for switching the signalling means (55) between the transmitting means (50, 51, 52, 53) and the receiving means (56) in response to a control signal, wherein the transmitting means (50, 51, 52, 53) incorporates a frequency source (51) for supplying a frequency signal, bistable circuit means (50) for producing, by frequency division of the frequency signal, a carrier frequency for the signals to be transmitted, and inhibit means for turning off the bistable circuit means (50) to inhibit the carrier frequency in response to the control signal.

FIG 1

FIG 2

FIG 3

FIG 4

FIG 5

FIG 6

FIG 7

FIG 8

FIG 9

FIG 10

$$\frac{dv}{dt} = \frac{dx}{dt}$$

FIG 11

F I G   10a

FIG 12